# EUROPEAN PATENT SPECIFICATION

(11) **EP 0 781 091 B1**
(45) Date of publication and mention of the grant of the patent: **25.08.1999**
(21) Application number: 95932743.8
(22) Date of filing: 12.09.1995
(51) Int. Cl.: A01N 43/00

(54) **IMPROVEMENTS IN OR RELATING TO INSECT REPELLENTS**
VERBESSERUNG AN ODER IN BEZUG AUF INSEKTEN-REPELLENTS
PERFECTIONNEMENTS SE RAPPORTANT A DES INSECTIFUGES

(30) Priority: 12.09.1994 EP 94306674
(43) Date of publication of application: 02.07.1997
(73) Proprietor: QUEST INTERNATIONAL B.V., 1411 GP Naarden (NL)
(72) Inventor: BEHAN, John, Martin, Kennington TN25 4EB (GB); OLIVER, Jennifer, Valerie, Kent TN27 9DR (GB); PAYNE, Ian, Michael, Willesborough Ashford, Kent TN24 0RY (GB); PERRING, Keith, Douglas, Ashford, Kent TN24 8HS (GB); HEALEY, Timothy, Philip, Nr. Salisbury, Wiltshire SP5 2PR (GB); SHARPINGTON, Pamela, Jane, Hartley DA3 8DJ (GB)
(74) Representative: Graham, John George
(86) International application number: EP9503612
(87) International publication number: WO9608147

(56) References cited:
- EP-A- 0 404 470
- WO-A-94/24999
- GB-A- 1 580 184
- US-A- 5 091 423
- DATABASE WPI Section Ch, Week 9526 Derwent Publications Ltd., London, GB; Class D23, AN 95-198195 XP002014834 & RU,C,2 022 001 (DZINTARS STOCK CO) , 30 October 1994

## Description

### Field of Invention

The present invention relates to fragrances which possess intrinsic insect-repellent properties, to compositions containing such fragrances and to a method of repelling insects. The invention also relates to apparatus and a method for testing the efficacy of a substance as an insect repellent.

### Background

Insect have long been known as a nuisance and, for some insect genera, as a health hazard. Mosquitoes, for instance, are a proven vector of diseases, and the genus Aedes in particular is associated with yellow fever, dengue, encephalitis and malaria (Encyclopedia Britannica). Although the problems may be reduced at source with the use of DDT and other chemical sprays in the breeding areas, fears over the persistence of chlorochemicals combined with increasing mosquito resistance to control chemicals (e.g. insecticides) have led to a reappraisal of the magnitude of the nuisance and the hazard. Physical barriers to the insects are not always possible, e.g. in the open air, where some form of personal repellent is necessary.

It is also a feature of recent times that the more environmentally-aware public tend to question to safety of many chemicals which were formerly taken for granted. One of these is the well-know personal insect repellent N,N-diethyl-m-toluamide (abbreviated as DEET, and commercially available as Delphone™). This was originally seen as the natural successor to the parent molecule, N,N-diethylbenzamide which was found to be strongly insect repellent but also irritating to human skin (McCabe et al., (1954), J. Org. Chem. 19, 493-498). Fears over possible allergenicity, disclosed in European Patent Application No. 167266 (Angus Chemical Company), as well as aversion to some of the physical properties of this compound such as oiliness and odour, have led to the search for less hazardous and more aesthetically acceptable methods of repelling insect pests, particularly mosquitoes.

Perfumes with intrinsic insect repellent properties, used either alone or in some form of carrier or base, overcome many of the problems highlighted above.

### Review of the prior art

Certain perfumery ingredients have long been known to possess insect deterrent properties, some of this information coming from what might be termed "folk knowledge". These materials include widely-known substances such as Citronella, Tolu and Peru Balsams, Eucalyptus oils, Huon Pine and other similar oils [M. Bouvier, International Frag. Co-ord. 29 October 1976]. Other materials known for their deterrent properties include those having camphoraceous odours, such as Camphor itself, Cypress oils, Galbanum etc. [H&R Contact, 36, 1984].

A more scientific approach to the properties of these natural sources has been undertaken by various researchers, such as Lemberkovics et al. [Acta Pharmaceutica Hungarica, 57, (1987) 133-142], Nahrstedt [Planta med. 42 (4), 313-32 (1981)], and Popescu [Chim. Anal. (Bucharest), 2 (1), 59-61 (1972)) who investigated the effects of Walnut Leaf oil. Kumbu and DiPhanzu (Plant Med. Phytother. 16 (1), 23-6 (1975)] investigated the deterrent effect of a range of Eucalypts against a selection of insect pests. However, modern perfumery encompasses a vast range of synthetic ingredients as well as natural substances. The work of W.V. King [US Department of Agriculture 1954, handbook 69] includes tests on a huge variety of synthetic chemicals tested included perfumery ingredients which were shown to have a deterrent effect against biting mosquitoes.

The popularly-used DEET has also been studied in comparison, and in conjunction, with a range of ingredients by various researchers. Nishimura et al. [Kagaku to Seibbutsu, 27 (8), 4886-6 (1989)] investigated the possible synergy of Eucalyptus citriodora and menthanediols with DEET. Solvents such as diethyl phthalate, dimethyl phthalate and dibutyl phthalate are also well known, and these provide the basis for commercial repellents which do not contain DEET, and are also cited in Kirk-Othmer Encyclopedia of Chemical Technology [3rd Edn. 476ff]. Canadian Patent 1 230 826 (1988) uses a combination of Citronella or Lavender oils, 2-ethylhexanediol and dimethyl phthalate.

Commonly utilised perfumery ingredients which provide "base notes' or act as fixatives are also known to extend the longevity of the protection. These incorporate such ingredients as Civet, Musk, ambergris, and Vanillin [Canadian Patent 1 106 278]. These are materials of perfumery ingredients. Rutledge [J. Am. Mosq. Control Association, 5 (1) March 1989] states that the effect of boiling point or molecular weight on the prolongation of protection time has been corroborated by several workers, often in independent studies.

Further studies on high boiling point ingredients used in connection with perfumery, referred to as "heavies" in WO 92/02136 (R&C Products Pty), are defined as having a boiling point greater than about 80-100°C at 4 mm Hg, and their synergistic use with diols derived from the acid cyclisation of citronella is described. Another example of such a "heavy" is Hercolyn D. (methyl ester of dihydroabietic acid), which is included in examples in US 5 109 022 (cited previously) and US 5 089 469. The teaching of this last patent describes the insect repellent use of Bisabolene-containing compositions.

Repellent chemicals may be classified into two main groups: general deterrents; and species-specific deterrents. Substances known to deter one species have been known to serve as an attractant to another. An example of this is the use of a mixture of citronellol and eugenol against clothes moths and Anthrenus beetles, described in patent application no. DE 3 901 341A [published 1990, Detia Freyberg GmbH]. The latter ingredient, Eugenol, is considered to be a general insect attractant [Kirk Othmer encyclopedia of Chemical Technology, cited above]. DEET, however, is considered to be a general, or broad-spectrum, insect repellent. Ingredients cited in the following section have been tested against mosquitoes, in particular against the genus Aedes. These materials may also act as general insect repellents.

A more recent publication discloses the use of perfumery ingredients such as a range of ketones in repelling Musca domestica and Aedes aegypti for a finite period of time [US patent 5 091 423, Wilson et al]. Specific repellent perfumery materials described therein include alpha, beta and delta Damascones, and the compositions are typically applied in perfumed candles.

Other materials having a bearing on perfumery include well-known solvents. Jeanne and Gregg disclose a composition containing methyl myristate, methyl palmitate and butyl palmitate, singly or in combination, as a repellent for "flying, biting and stinging insects", [US patent 5 109 022].

A further class of materials having value as perfumery ingredients are the N-alkyl neoalkanamides (Cl to 4), disclosed in UK patent application number GB 2 194 787A. These are also described as being "sufficiently substantive to the substrate being washed" (when incorporated into shampoos, liquid and bar soaps, etc.) "so as to impart insect repelling properties to it".

Several documents describe a variety of test methodologies for determining the efficacy of a substance as an insect repellent, such as US 5 109 022 US 5 089 469 which describe the use of an insect olfactometer, and the patent application EP 0 476 885A which describes the use of live chicks.

In spite of the many investigations into the deterrent effect of chemicals against a variety of arthropoda, there is as yet no general method whereby one may reliably predict the specific or general deterrent efficacy of untested materials.

It is thus an object of the present invention to provide effective insect repellent compositions comprising perfumed ingredients and to provide apparatus and a method for testing the efficacy of substances as insect repellents.

### Summary of the Invention

In a first aspect the invention provides an insect repellent composition comprising at least one of the group of compounds consisting of:
1,2,3a,4,5,5a,6,7,8,9,9a,9b-dodecahydro-3a,6,6,9a-tetramethylnaphtho [2,1-b] furan; 4-(tricyclo [5.2.1.0^{2,6}] decylidene-8) butanal; l-ethoxy-1-(2'-phynlethoxy) ethane; acetyl cedrene; and propylidene phthalide;
1,2,3a,4,5,5a,6,7,8,9,9a,9b-dodecahydro-3a,6,6,9a-tetramethylnaphtho (2,1-b] furan is commercially available as AMBERLY™, and the compound is hereinafter referred to as "amberlyn" for the sake of brevity. Similarly, 4-(tricyclo [5.2.1.0^{2,6}] decylidene-8) butanal is commercially available as DUPICAL™, and the compound is hereinafter abbreviated as "dupical". 1-ethoxy-1-(2'-phenylethoxy) ethane is commercially available as EFETAAL™ and the compound is hereinafter abbreviated as "efetaal". Acetyl cedrene is commercially available as LIXITONE™.

The invention also provides use of a perfumed composition comprising at least one of the group of compounds consisting of "amberlyn", "dupical", "efetaal", acetyl cedrene, and propylidene phthalide as an insect repellent.

In a further aspect the invention provides a perfumed composition for use as an insect repellent, the composition comprising at least one of the group of compounds consisting of: "amberlyn"; "duplical"; "efetaal"; acytyl cedrene; and propylidene phthalide.

Preferably the compositions variously defined above are used to repel biting insects, such as mosquitoes, particularly members of the genus Aedes.

Preferably the compositions comprise at least 2.5 % w/w, more preferably at least 5 % w/w, and most preferably at least 7.5 % w/w of at least one of the six compounds defined above.

It is preferred that the compositions comprise two or more of the compounds defined above.

Compositions in accordance with the invention are capable of repelling insects upon immediate application and for up to at least 1 hour after application.

Compositions in accordance with the invention preferably constitute, or are comprised in, personal products or cosmetics for use on the skin and/or hair. Examples of such products include fine fragrances, colognes, skin creams, skin lotions, deodorants, talcs, bath oils, soaps shampoos, hair conditioners and styling agents.

Alternatively, compositions in accordance with the invention may constitute, or be comprised in, household products such as: air fresheners (including "heated" air fresheners in which insect repellent substances are released upon heating e.g. electrically, or by burning [e.g. joss-sticks, candles]); hard surface cleaners; or laundry products (e.g. laundry detergent-containing compositions, conditioners).

Preferably the cosmetics, personal products and household products defined above comprise between 0.1 % and 10 % of a composition in accordance with the invention.

The compositions of the invention preferably comprise additional perfumery materials to produce pleasing perfumes with useful repellent activity.

Other materials which may be present in the compositions (at concentrations from 0-97.5 % w/w) include fragrances, solvents, diluents and fixatives known in the art, such as:
Aldehyde Cll (Undecylenic Aldehyde); Aldehyde iso Cll (GIV); Allspice oil; Allyl cyclohexyl propionate; Amyl sakicylate; Amylcinnamic aldehyde; Anethole; Anisic alcohol; Anisic aldehyde; Applinal (Q); Bay oil; Benzyl acetate; Benzyl benzoate; Benzyl cinnamate; Benzyl propionate; Benzyl salicylate; Bourgeonal (Q); Brahmanol; Camphor powder synthetic; Cedarwood Virginion; Cedrenol; Cedryl acetate; Celestolide (IFF); Cineole; Cinnamic alcohol; cinnamic aldehyde; Cinnamon Leaf Oil; Cinnamyl acetate; cis-3-Hexenol; Citral; Citronella oil; Citronellal; Citronellol; Citronellyl acetate; Citronellyl oxyacetaldehyde; Clove oil; Coriander oil; Coumarin; Cuinic aldehyde; Cyclamen aldehyde; Decanal; 9-Decenol; Dibenzyl ether; Dibutyl phthalate; Diethyl phthalate; Dihydromyrcenol; Dimethyl anthranilate; Dimethyl phthalate; Dimycretol (IFF); diphenylmethane; Diphenyl oxide; Dimethyl benzyl carbinyl acetae; Dodecanol; Dodecanal; Elemi oil; Ethyl methyl phenyl glycidate; Ethyl cinnamate; Ethyl safranate (Q); ethyl vanillin; Eugenol; Evergreen oils (Pine oils etc.); gamma-Nonalactone; gamma-undecalactone; Cardamide (Q); Geraniol; Geranium bourbon; Geranyl acetate; Geranyl formate; Gum Benzoin; Heliotropin; Hercolyn D (HER); Hexyl benzoate; Hexylcinnamic aldehyde; Hydratropic aldehyde dimethyl acetal; Hydroxycitronellal; Hydroxycitronellal dimethyl acetal; Indole; iso Bornyl acetate; Isolongifolanone; Isopropyl myristate; Iso-cyclocitral (GIV, IFF); Jasmacyclene; Jasmin oil; Lavandin Abrialis; Lavender oil Lilial (GIV); Linalol; Linalyl acetate; Maceal (Q); Menthol Laevo; Methyl anthranilate; Methyl cedryl ketone; Methyl dihydrojasmonate; Methyl ionone; Methyl ionone, alpha iso-; Methyl myristate; Methyl naphthyl ketone; Methyl salicylate; Moss treemoss; Musk ketone; Neocaspirene (Q); Nerol; Nerolin Bromelia; Neryl acetate; Nonanal; Oakmoss absolute; Octanal Olibanum resionoid; para-Cresyl phenylacetate; para-Mehoxyacetophenone; Patchouli oil; Peppermint oil; Petitgrain oil; 2-Phenoxyethanol; Phenoxyethyl iso butyrate; Phenylethyl acetate; Phenylethyl alcohol; Phenylethyl butyrate; Phenylethyl phenylacetate; Pimento oil; Pinene, alpha; Para-tert.butyl-cyclohexyl acetate; Resinoid Benzoin Siam; Rose oil; Rosemary oil; Sandalwood oil; Terpineol; Tetrahydrolinalol; Tetrahydromuguol (IFF); Thyme Red; Undecanal; Vanillin; Verbena oil; Vetyvert Bourbon; Yara; and Ylang ylang.

Compounds are obtainable from the suppliers as indicated below: for those compounds labelled "(Q)", - Quest International, "(IFF)" - International Flavors & Fragrances, Inc., "(GIV)" - Givaudan, "(HER)" - Hercules B.V..

In another aspect, the invention provides a method of repelling insects from an object or an airspace, comprising application to the object or into the airspace, of an effective amount of a composition in accordance with the invention. Typically the object is a human body.

In yet another aspect, the invention provides apparatus for testing the efficacy of a substance as an insect repellent, said apparatus comprising:
a housing having an inlet and outlet for air, said inlet and outlet being inter-connected by a passage comprising one or more filters to remove carbon dioxide and volatile organic compounds from the air passing therethrough and at least one test chamber for receiving and retaining the insects concerned, said test chamber being associated with the substance under test.

Preferably the apparatus comprises means for monitoring the behaviour of the insects within the test chamber. Conveniently such monitoring means comprises a video camera and video recorder.

Preferably the apparatus further comprises means for forcing air through the housing in the desired direction. Conveniently this comprises a fan near the inlet, which may be supplemented with an exhaust fan near the outlet if desired. Preferably the apparatus also comprises further means of regulating the air flow, such as a damper situated near the inlet fan.

Preferably the housing comprising two filters adjacent to the air inlet. Conveniently, one such filter comprises activated charcoal and the other filter is a "molecular sieve" (such as the type 5A zeolite filter, obtainable from Union Carbide) to remove CO₂ and volatile organic molecules which might affect the test. In a preferred embodiment, the material in each filter is held within the cells of a 1 inch thick aluminium honeycomb, sandwiched between 2 sheets of stainless steel mesh and retained within an aluminium frame. The frames are fitted to the inside of the housing such that air passing through the housing must pass through the filters.

I a preferred embodiment the apparatus comprises means for introducing an insect attractant downstream of the filter(s). Typically such means comprise a sealable aperture. Suitable attractants will vary depending on the insect concerned, but may include carbon dioxide or Guinea Pig odour.

Preferably the insect used is a mosquito. More preferably the insect is a 4-7 day old naive insect. A species such as Aedes aegypti is found particularly suitable.

It is highly preferred that the side walls of the test chamber are substantially air tight. The end walls must be at least partially air permeable to allow the substance under test to enter and exit the test chamber. Preferably the end walls of the test chamber comprise cotton netting. This is of sufficiently fine material to retain insects such as mosquitoes but allows the free flow of air.

Preferably the housing comprises more than one test chamber. Conveniently four such chambers are used. Where more than one test chamber is present, the test chambers are arranged "in parallel" such that air containing a test substance passes through only one test chamber.

It is preferred that the test substance is impregnated on a membrane which may be, for example, skin such as artificial skin or cadaver skin. Preferably the membranes are warmed (compared to the ambient temperature) and humidified. This is preferably accomplished by contacting the inner surface of the membrane with a supply of warm water.

In use, the apparatus is assembled with the insects concerned retained within the test chamber. The substance under test is placed in (on the upstream side) the test chamber. Air enters the housing via the inlet and passed through the filters. The test substance at least partially vapourises and is carried in the air flow through the passage interconnecting the air inlet and outlet (thus passing through the test chamber). The effect of the test substance on the insects in the test chamber can be monitored, either by a human observer or, for example, electronically.

In a further aspect, the invention provides a method of testing the efficacy of substance as an insect repellent, comprising use of the apparatus defined above.

The various aspects of the invention will now be further described by way of example and with reference to the drawing Figure, which is a schematic representation of the apparatus of the invention.

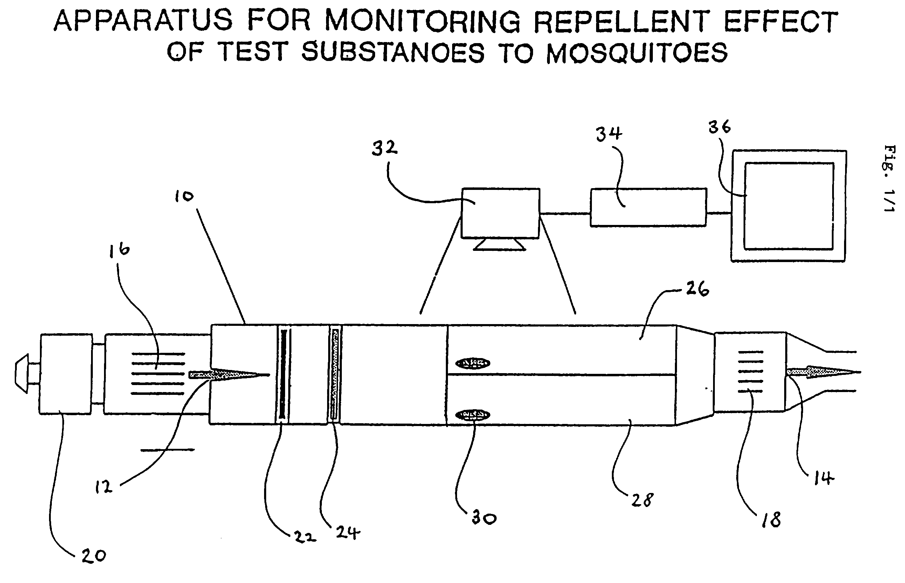

In the embodiment shown in Figure 1, the apparatus comprises a housing 10 comprising an inlet fan 16 and exhaust fan 18, respectively. The inlet fan 16 is also associated with the shuttered damper 20, which sereves to further regulate the flow of air. The housing further comprises filters 22, 24 and four test chambers 26, 28 (only two shown). Each test chamber holds 20 naive insects of the species Aedes aegypti (not shown) and a membrane impregnated with a test substance.

The apparatus also comprises four Sanyo™ VC-2512 monochrome CCD video cameras 32 (only shown for clarity), the Panasonic™ colour quad system WJ-450 (not shown), a VTG-22 video timer (omitted for clarity), the Panasonic™ VV-180VHS video cassette recorder 34, and the Sanyo™ VM-4512 monitor 36.

The apparatus may be assembled and used according to the following description.

Four test chambers were prepared using 12 inch 200 gauge layfalt tubing. The synthetic plastics tubing was attached to oblong stainless steel frames (6 inches by 6 inches by 36 inches) using double-sided adhesive tape. 8 inch squares of cotton netting were used to cover the ends of the chambers and secured using adhesive tape.

An aluminium tunnel, forming the inlet end region of the housing 10, comprised the filters 22 and 24. Filter 22 comprised activated charcoal and filter 24 comprised a type 5A zeolite "molecular sieve" (from Union Carbide) to remove CO₂ and volatile organic substances. The material in each filter was held within the cells of a 1 inch thick sheet of aluminium honeycomb, sandwiched between 2 sheets of stainless steel mesh, held in an aluminium frame. The filters were bolted by their frames to the inside of the aluminium tunnel.

Four artificial membranes 30 were prepared as follows: double layers of membrane were stretched over the open end of four thistle funnels and secured using elastic bands. Testing is carried out at 27 °C. The membranes were kept moist and warmed above the ambient temperature throughout the test by passing a supply of water (at 34 °C) through the thistle funnels, so as to contact the inner surface of the membranes.

The candidate repellent under test (30 microlitres) was applied to a membrane and spread as evenly as possible across the membrane surface. This was repeated with two other test materials (although the same substance may be tested, if desired, to give triplicate results), and the fourth membrane left untreated as a control. The membranes were then inserted into the test chambers (as shown in Figure 1).

The exhaust fan was switched on to vent air from the apparatus. 20 mosquitoes were then introduced into each test chamber.

24 inch 200 gauge layflat tubing was used to connect the various elements and the inlet fan 16 switched on and damper 20 opened. Air was thus forced through the inlet 12, the filters 22, 24 over the artificial membranes 20 and through the test chambers 26, 28 containing the mosquitoes. The separation of the membranes ensured that air passing over a particular membrane would pass through only one test chamber.

Four cameras 32 positioned downwind of the test chambers were each focused onto a particular membrane, and the images produced by the cameras displayed on a single monitor 36 by means of a quad splitter. An electronic time is used to project the date and time onto the screen, and the VCR 34 used to record the data.

The mosquitoes in the test chambers were activated by introduction of a stimulus upwind of the target membranes (such as human breath, or guinea pig odour) and the number of insects attempting to bite each membrane over the next ten minute period was recorded. After ten minutes, the recording was stopped and the test chambers removed from their position immediately downwind of the membranes.

The treated membranes were left untouched (although still warmed and moistened) for one hour with the fans switched on, after which time the test chambers were re-introduced and the test repeated to determine the repellency of the test candidates one hour after application.

### General Example

Using the apparatus of the invention, a large number of perfumed substances were analysed for efficacy as insect repellents. Sample results for some of those compounds tested are shown in Table 1. This table shows the repellency (as measured by the percentage reduction in the number of mosquitoes on the treated membrane compared to the untreated control), both initially when the test substance is first applied, and after a delay of one hour. The table shows that "dupical" and propylidene phthalide are the most effective insect repellents.

| | **Repellency** | |
|---|---|---|
| **Material** | **Initial** | **One hour** |
| Amberlyn™ | 52 % | 18 % |
| Dupical™ | 87 % | 68 % |
| Efetaal™ | 83 % | 36 % |
| Lixetone | 37 % | 38 % |
| Proylidene phthalide | 86 % | 76 % |

### Specific Examples

A number of perfume compositions were made in accordance with the invention, each comprising at least 2.5 % w/w of one of the active compounds identified previously and comprising other standard perfumery materials. These compositions were termed perfumes I-IV and had the following formulations (numbers refer to parts per thousand):
(Trademark materials are indicated as above);

### Perfume 1

| | |
|---|---|
| Musk Ketone | 25 |
| Vanillin | 10 |
| Methyl napgthyl ketone | 10 |
| Diethyl phthalate | 150 |
| Hercolyn D (HER) | 100 |
| Amylcinnamic aldehyde | 60 |
| Geraniol | 205 |
| Dimyrcetol (IFF) | 100 |
| Eugenol | 20 |
| Methyl ionone, alpha iso | 50 |
| para-tert. Butyl cyclohexyl acetate | 80 |
| Lixetone (Q) | 30* |
| Lavandin Abrialis | 150 |
| Aldehyde C12 (Lauric) 50 % in diethyl phthalate (DEP) | 10 |
| | 1000 |

| | |
|---|---|
| * Table 1 material | |

### Perfume II

| | |
|---|---|
| Musk Ketone | 25 |
| Vanillin | 10 |
| Methyl napgthyl ketone | 10 |
| Diethyl phthalate | 150 |
| Hercolyn D (HER) | 100 |
| Amylcinnamic aldehyde | 60 |
| Geraniol | 205 |
| Dimyrcetol (IFF) | 100 |
| Eugenol | 20 |
| Methyl ionone, alpha iso | 20 |
| Efetaal (Q) | 25* |
| para-tert. Butyl cyclohexyl acetate | 110 |
| Lavandin Abrialis | 150 |
| Dupical (Q) | 50* |
| Aldehyde C12 (Lauric) 50 % in diethyl phthalate (DEP) | 10 |
| | 1000 |

| | |
|---|---|
| * Table 1 material | |

### Perfume III

| | |
|---|---|
| Musk Ketone | 25 |
| Vanillin | 10 |
| Methyl napgthyl ketone | 10 |
| Diethyl phthalate | 150 |
| Hercolyn D (HER) | 100 |
| Amylcinnamic aldehyde | 60 |
| Geraniol | 205 |
| Dimyrcetol (IFF) | 100 |
| Eugenol | 20 |
| Methyl ionone, alpha iso | 20 |
| Efetaal (Q) | 30* |
| Lixetone (Q) | 120* |
| Lavandin Abrialis | 140 |
| Dupical (Q) | 50* |
| Aldehyde C12 (Lauric) 50 % DEP | 10 |
| | 1000 |

| | |
|---|---|
| * Table 1 material | |

### Perfume IV

| | |
|---|---|
| Coumarin | 50 |
| Vanillin | 10 |
| Ethyl vanillin | 10 |
| Heliotropin | 40 |
| para-Methoxy acetophenone | 25 |
| Cinnamic alcohol | 50 |
| Amberlyn super (Q) | 50* |
| Methyl anthranilate | 20 |
| Diphenylmethane | 25 |
| Diethyl phthalate | 150 |
| Iso propyl myristate | 50 |
| Amylcinnamic aldehyde | 75 |
| Benzyl propionate | 50 |
| Hexyl benzoate | 125 |
| Geraniol | 75 |
| Phenylethyl alcohol | 50 |
| Phenoxyethyl iso butyrate, beta | 20 |
| Hydroxycitronellal | 30 |
| Efetaal (Q) | 40* |
| Ethyl methyl phenyl glycidate | 15 |
| Propylidene phthalide | 5* |
| Tridecene-2-nitrile | 5 |
| Aldehyde C8 50 % DEP | 10 |
| Aldehyde C11 50 % DEP | 10 |
| Aldehyde C12 (Lauric) 50 % DEP | 10 |
| | 1000 |

| | |
|---|---|
| * Table 1 material | |

A fifth composition, Perfume V, was prepared which was not a composition in accordance with the invention. It comprised large amounts of standard perfumery materials, including those which are preferred adjuncts to compositions of the invention, but it did not include any of the six active compounds defined previously. Perfume V was used for comparison and had the following formulation:

### Perfume V: (an example of a formulation which includes ingredients selected from the list of preferred materials, but which omits any ingredients claimed in Table 1, for comparison).

| | |
|---|---|
| Aldehyde C8 | 1 |
| Aldehyde C10 | 3 |
| Benzyl acetate | 75 |
| Benzyl alcohol | 10 |
| Citral | 175 |
| Citrathal (Q) | 25 |
| Geranyl nitrile | 30 |
| Jasmacyclene (Q) | 2 |
| Lemon oil | 230 |
| Musk xylene | 10 |
| Nerolin Bromelia | 10 |
| Orange terpenes | 300 |
| para tert. Butyl cyclohexyl acetate | 35 |
| Terpinyl acetate | 93 |
| Traseolide (Q) | 1 |
| | 1000 |

Perfume compositions I-IV were assayed for efficacy as insect repellents using the apparatus defined previously, in an experiment comparing them with perfume V. The results are shown below in Table 2, which gives the repellency (measured in terms of the % reduction in the number of mosquitoes on treated membranes relative to an untreated control), both initially and after one hour. As can be seen, Perfumes I-IV all showed significantly greater repellency than the comparison Perfume V, at both time points. The order of repellency (after one hour, best first) was Perfume III, Perfume I, Perfume IV, Perfume II.

**Table 2**

| | **Repellency** | |
|---|---|---|
| **Material** | **Initial** | **One hour** |
| Perfume I | 88 % | 58 % |
| Perfume II | 88 % | 27 % |
| Perfume III | 87 % | 81 % |
| Perfume I | 77 % | 48 % |
| Perfume V | 34 % | 10 % |

## Claims

1. A method of repelling insects from an object or an airspace, characterised in that an effective amount of 1,2,3a,4,5,5a,6,7,8,9,9a,9b-dodecahydro-3a,6,6,9a-tetramethylnaphtho[2,1-b]furan or acetyl cedrene is applied to the object or into the airspace.

2. A method according to claim 1 characterised in that the 1,2,3a,4,5,5a,6,7,8,9,9a,9b-dodecahydro-3a,6,6,9a-tetramethylnaphtho[2,1-b]furan or acetyl cedrene is applied in the form of a perfumed composition.

3. A method according to claim 1 or 2 characterised in that the 1,2,3a,4,5,5a,6,7,8,9,9a,9b-dodecahydro-3a,6,6,9a-tetramethylnaphtho[2,1-b]furan or acetyl cedrene is applied in the form of a composition comprising at least 2.5% w/w of 1,2,3a,4,5,5a,6,7,8,9,9a,9b-dodecahydro-3a,6,6,9a-tetramethylnaphtho[2,1-b]furan or acetyl cedrene.

4. A method according to claim 2 or 3 characterised in that the composition contains at least 5% w/w of 1,2,3a,4,5,5a,6,7,8,9,9a,9b-dodecahydro-3a,6,6,9a-tetramethylnaphtho[2,1-b]furan or acetyl cedrene.

5. A method according to any one of claims 2 to 4 characterised in that the composition comprises at least 7.5% w/w of 1,2,3a,4,5,5a,6,7,8,9,9a,9b-dodecahydro-3a,6,6,9a-tetramethylnaphtho[2,1-b]furan or acetyl cedrene.

6. A method according to any one of claims 2 to 5 characterised in that the composition comprises 1,2,3a,4,5,5a,6,7,8,9,9a,9b-dodecahydro-3a,6,6,9a-tetramethylnaphtho[2,1-b]furan and at least one ingredient selected from the group consisting of 4-(tricyclo[5.2.1.0^{2,6}] decylidene-8)butanal; 1-ethoxy-1-(2'-phenylethoxy)ethane; acetyl cedrene and propylidene phthalide.

7. A method according to any one of claims 2 to 5 characterised in that the composition comprises acetyl cedrene and at least one ingredient selected from the group consisting of: 1,2,3a,4,5,5a,6,7,8,9,9a,9b-dodecahydro-3a,6,6,9a-tetramethylnaphtho[2,1-b]furan; 4-(tricyclo[5.2.1.0^{2,6}]-decylidene-8)butanal; 1-ethoxy-1-(2'-phenylethoxy)ethane and propylidene phthalide.

8. A method according to any one of claims 2 to 7 characterised in that the composition comprises 0-97.5% w/w of standard perfumery ingredients.

9. A method according to any one of claims 2 to 8 characterised in that the composition comprises 0-97.5% w/w of fragrances, solvents, diluents and fixatives.

10. A method according to any one of the preceding claims characterised in that the insects are mosquitoes.

11. A method according to any one of claims 2 to 10 characterised in that the composition is capable of repelling insects for at least 1 hour after application to an object or an airspace.

12. A method according to any one of claims 2 to 11 characterised in that the composition comprises a cosmetic product, a personal product or a household product.

13. A method according to claim 12 characterised in that the cosmetic, personal or household product comprises between 0.1% and 10% of a composition as used in accordance with any one of claims 2 to 11.

14. Use of a perfumed composition comprising 1,2,3a,4,5,5a,6,7,8,9,9a,9b-dodecahydro-3a,6,6,9a-tetramethylnaphtho[2,1-b]furan and at least one ingredient selected from the group of compounds consisting of: 4-(tricyclo[5.2.1.0^{2,6}] decylidene-8)butanal; 1-ethoxy-1-(2'-phenylethoxy)ethane; acetyl cedrene and propylidene phthalide as an insect repellent.

15. Use of a perfumed composition comprising acetyl cedrene and at least one ingredient selected from the group of compounds consisting of: 1,2,3a,4,5,5a,6,7,8,9,9a,9b-dodecahydro-3a,6,6,9a-tetramethylnaphtho[2,1-b]furan; 4-(tricyclo[5.2.1.0^{2,6}] decylidene-8)butanal; 1-ethoxy-1-(2'-phenylethoxy)ethane and propylidene phthalide as an insect repellent.

16. A composition comprising a mixture of 1,2,3a,4,5,5a,6,7,8,9,9a,9b-dodecahydro-3a,6,6,9a-tetramethylnaphtho[2,1-b]furan and at least one compound selected from the group consisting of: 4-(tricyclo[5.2.1.0^{2,6}]decylidene-8) butanal; 1-ethoxy-1-(2'-phenylethoxy)ethane; acetyl cedrene and propylidene phthalide.

17. A composition comprising a mixture of acetyl cedrene and at least one compound selected from the group consisting of: 1,2,3a,4,5,5a,6,7,8,9,9a,9b-dodecahydro-3a,6,6,9a-tetramethylnaphtho[2,1-b]furan; 4-(tricyclo-[5.2.1.0^{2,6}]-decylidene-8) butanal; 1-ethoxy-1-(2'-phenylethoxy) ethane and propylidene phthalide.

## Patentansprüche

1. Verfahren zur Abwehr von Insekten von einem Gegenstand oder einem Luftraum, dadurch gekennzeichnet, daß eine wirksame Menge von 1,2,3,3a,4,5,5a,6,7,8,9,9a,9b-Dodecahydro-3a,6,6,9a-tetramethylnaphtho-[2,1-b]-furan oder Acetylcedren auf das Objekt oder in den Luftraum gebracht wird.

2. Verfahren nach Anspruch 1, dadurch gekennzeichnet, daß 1,2,3,3a,4,5,5a,6,7,8,9,9a,9b-Dodecahydro-3a,6,6,9a-tetramethylnaphtho-[2,1-b]-furan oder Acetylcedren in Form einer parfümierten Zusammensetzung aufgebracht wird.

3. Verfahren nach Anspruch 1 oder 2, dadurch gekennzeichnet, daß 1,2,3,3a,4,5,5a,6,7,8,9,9a,9b-Dodecahydro-3a,6,6,9a-tetramethylnaphtho-[2,1-b]-furan oder Acetylcedren in Form einer Zusammensetzung aufgebracht wird, die wenigstens 2,5 % w/w von 1,2,3,3a,4,5,5a,6,7,8,9,9a,9b-Dodecahydro-3a,6,6,9a-tetramethylnaphtho-[2,1-b]-furan oder Acetylcedren aufweist.

4. Verfahren nach Anspruch 2 oder 3, dadurch gekennzeichnet, daß die Zusammensetzung wenigstens 5 % w/w von 1,2,3,3a,4,5,5a,6,7,8,9,9a,9b-Dodecahydro-3a,6,6,9a-tetramethylnaphtho-[2,1-b]-furan oder Acetylcedren enthält.

5. Verfahren nach einem der Ansprüche 2 bis 4, dadurch gekennzeichnet, daß die Zusammensetzung wenigstens 7,5 % w/w von 1,2,3,3a,4,5,5a,6,7,8,9,9a,9b-Dodecahydro-3a,6,6,9a-tetramethylnaphtho-[2,1-b]-furan oder Acetylcedren umfaßt.

6. Verfahren nach einem der Ansprüche 2 bis 5, dadurch gekennzeichnet, daß die Zusammensetzung 1,2,3,3a,4,5,5a,6,7,8,9,9a,9b-Dodecahydro-3a,6,6,9a-tetramethylnaphtho-[2,1-b]-furan und wenigstens einen Inhaltsstoff, ausgewählt aus der Gruppe bestehend aus 4-(Tricyclo[5.2.1.0^{2,6}]-decyliden-8)-butanal; 1-Ethoxy-1-(2'-phenylethoxy)-ethan; Acetylcedren und Propylidenphthalid aufweist.

7. Verfahren nach einem der Ansprüche 2 bis 5, dadurch gekennzeichnet, daß die Zusammensetzung Acetylcedren und wenigstens einen Inhaltsstoff, ausgewählt aus der Gruppe bestehend aus 1,2,3,3a,4,5,5a,6,7,8,9,9a,9b-Dodecahydro-3a,6,6,9a-tetramethylnaphtho-[2,1-b]-furan; 4-(Tricyclo[5.2.1.0^{2,6}]-decyliden-8)-butanal; 1-Ethoxy-1-(2'-phenylethoxy)-ethan und Propylidenphthalid aufweist.

8. Verfahren nach einem der Ansprüche 2 bis 7, dadurch gekennzeichnet, daß die Zusammensetzung 0 bis 97,5 % w/w an Standard-Parfüminhaltsstoffen umfaßt.

9. Verfahren nach einem der Ansprüche 2 bis 8, dadurch gekennzeichnet, daß die Zusammensetzung 0 bis 97,5 % w/w an Duftstoffen, Lösungsmitteln, Verdünnungsmitteln und Fixateuren umfaßt.

10. Verfahren nach einem der vorherigen Ansprüche, dadurch gekennzeichnet, daß die Insekten Stechmücken bzw. Moskitos sind.

11. Verfahren nach einem der Ansprüche 2 bis 10, dadurch gekennzeichnet, daß die Zusammensetzung Insekten wenigstens für 1 Stunde nach Aufbringung auf einen Gegenstand oder Einbringung in einen Luftraum abwehren kann.

12. Verfahren nach einem der Ansprüche 2 bis 11, dadurch gekennzeichnet, daß die Zusammensetzung ein kosmetisches Produkt, ein Körperpflegeprodukt oder ein Haushaltsprodukt umfaßt.

13. Verfahren nach Anspruch 12, dadurch gekennzeichnet, daß das kosmetische Produkt, Körperpflegeprodukt oder Haushaltsprodukt zwischen 0,1 % und 10 % einer Zusammensetzung gemäß einem der Ansprüche 2 bis 11 aufweist.

14. Verwendung einer parfümierten Zusammensetzung umfassend 1,2,3,3a,4,5,5a,6,7,8,9,9a,9b-Dodecahydro-3a,6,6,9a-tetramethylnaphtho-[2,1-b]-furan und wenigstens einen Inhaltsstoff, ausgewählt aus der Gruppe der Verbindungen bestehend aus 4-(Tricyclo[5.2.1.0^{2,6}]-decyliden-8)-butanal; 1-Ethoxy-1-(2'-phenylethoxy)-ethan; Acetylcedren und Propylidenphthalid als Insektenabwehrmittel.

15. Verwendung einer parfümierten Zusammensetzung umfassend Acetylcedren und wenigstens einen Inhaltsstoff, ausgewählt aus der Gruppe der Verbindungen bestehend aus 1,2,3,3a,4,5,5a,6,7,8,9,9a,9b-Dodecahydro-3a,6,6,9a-tetramethylnaphtho-[2,1-b]-furan; 4-(Tricyclo[5.2.1.0^{2,6}]-decyliden-8)-butanal; 1-Ethoxy-1-(2'-phenylethoxy)-ethan und Propylidenphthalid als Insektenabwehrmittel.

16. Zusammensetzung umfassend eine Mischung aus 1,2,3,3a,4,5,5a,6,7,8,9,9a,9b-Dodecahydro-3a,6,6,9a-tetramethylnaphtho-[2,1-b]-furan und wenigstens einer Verbindung ausgewählt aus der Gruppe bestehend aus 4-(Tricyclo[5.2.1.0^{2,6}]-decyliden-8)-butanal; 1-Ethoxy-1-(2'-phenylethoxy)-ethan; Acetylcedren und Propylidenphthalid.

17. Zusammensetzung umfassend eine Mischung aus Acetylcedren und wenigstens einer Verbindung, ausgewählt aus der Gruppe bestehend aus 1,2,3,3a,4,5,5a,6,7,8,9,9a,9b-Dodecahydro-3a,6,6,9a-tetramethylnaphtho-[2,1-b]-furan; 4-(Tricyclo-[5.2.1.0^{2,6}]-decyliden-8)-butanal; 1-Ethoxy-1-(2'-phenylethoxy)-ethan und Propylidenphthalid.

## Revendications

1. Procédé pour repousser des insectes d'un objet ou d'un volume d'air, caractérisé en ce qu'une quantité efficace de 1,2,3a,4,5,5a,6,7,8,9,9a,9b-dodécahydro-3a,6,6,9a-tétraméthylnaphto-[2,1-b]-furane ou d'acétyl cédrène est appliquée à l'objet ou dans le volume d'air.

2. Procédé suivant la revendication 1, caractérisé en ce que le 1,2,3a,4,5,5a,6,7,8,9,9a,9b-dodécahydro-3a,6,6,9a-tétraméthylnaphto-[2,1-b]-furane ou l'acétyl cédrène est appliqué sous la forme d'une composition parfumée.

3. Procédé suivant les revendication 1 ou 2, caractérisé en ce que le 1,2,3a,4,5,5a,6,7,8,9,9a,9b-dodécahydro-3a,6,6,9a-tétraméthylnaphto-[2,1-b]-furane ou l'acétyl cédrène est appliqué sous la forme d'une composition comprenant au moins 2,5% en poids/poids de 1,2,3a,4,5,5a,6,7,8,9,9a,9b-dodécahydro-3a,6,6,9a-tétraméthylnaphto-[2,1-b]-furane ou d'acétyl cédrène.

4. Procédé suivant les revendications 2 ou 3, caractérisé en ce que la composition comprend au moins 5% en poids/poids de 1,2,3a,4,5,5a,6,7,8,9,9a,9b-dodécahydro-3a,6,6,9a-tétraméthylnaphto-[2,1-b]-furane ou d'acétyl cédrène.

5. Procédé suivant l'une quelconque des revendications 2 à 4, caractérisé en ce que la composition comprend au moins 7,5% en poids/poids de 1,2,3a,4,5,5a,6,7,8,9,9a,9b-dodécahydro-3a,6,6,9a-tétraméthylnaphto-[2,1-b]-furane ou d'acétyl cédrène.

6. Procédé suivant l'une quelconque des revendications 2 à 5, caractérisé en ce que la composition comprend du 1,2,3a,4,5,5a,6,7,8,9,9a,9b-dodécahydro-3a,6,6,9a-tétraméthylnaphto-[2,1-b]-furane et au moins un composant choisi dans le groupe consistant en 4-(tricyclo-[5.2.1.0^{2,6}]-décylidène-8)-butanal, 1-éthoxy-1-(2'-phényléthoxy)-éthane, acétyl cédrène et propylidène phtalide.

7. Procédé suivant l'une quelconque des revendications 2 à 5, caractérisé en ce que la composition comprend de l'acétyl cédrène et au moins un composant choisi dans le groupe consistant en 1,2,3a,4,5,5a,6,7,8,9,9a,9b-dodécahydro-3a,6,6,9a-tétraméthylnaphto-[2,1-b]-furane, 4-(tricyclo-[5.2.1.0^{2,6}]-décylidène-8)-butanal, 1-éthoxy-1-(2'-phényléthoxy)-éthane et propylidène phtalide.

8. Procédé suivant l'une quelconque des revendications 2 à 7, caractérisé en ce que la composition comprend 0 à 97,5% en poids/poids de composants standard de parfumerie.

9. Procédé suivant l'une quelconque des revendications 2 à 8, caractérisé en ce que la composition comprend 0 à 97,5% en poids/poids de parfums, solvants, diluants et fixatifs.

10. Procédé suivant l'une quelconque des revendications précédentes, caractérisé en ce que les insectes sont des moustiques.

11. Procédé suivant l'une quelconque des revendications 2 à 10, caractérisé en ce que la composition est capable de repousser des insectes pendant au moins une heure après application à un objet ou dans un volume d'air.

12. Procédé suivant l'une quelconque des revendications 2 à 11, caractérisé en ce que la composition est un constituant d'un produit cosmétique, d'un produit à usage personnel ou d'un produit ménager.

13. Procédé suivant la revendication 12, caractérisé en ce que le produit cosmétique, personnel ou ménager comprend entre 0,1% et 10% d'une composition telle qu'elle est utilisée suivant l'une quelconque des revendication 2 à 11.

14. Utilisation d'une composition parfumée comprenant du 1,2,3a,4,5,5a,6,7,8,9,9a,9b-dodécahydro-3a,6,6,9a-tétraméthylnaphto-[2,1-b]-furane et au moins un composant choisi dans le groupe consistant en 4-(tricyclo-[5.2.1.0^{2,6}]-décylidène-8)-butanal, 1-éthoxy-1-(2'-phényléthoxy)-éthane, acétyl cédrène et propylidène phtalide, en tant qu'insectifuge.

15. Utilisation d'une composition parfumée comprenant de l'acétyl cédrène et au moins un composant choisi dans le groupe consistant en 1,2,3a,4,5,5a,6,7,8,9,9a,9b-dodécahydro-3a,6,6,9a-tétraméthylnaphto-[2,1-b]-furane, 4-(tricyclo-[5.2.1.02,6]-décylidène-8)-butanal, 1-éthoxy-1-(2'-phényléthoxy)-éthane et propylidène phtalide, en tant qu'insectifuge.

16. Composition comprenant un mélange de 1,2,3a,4,5,5a,6,7,8,9,9a,9b-dodécahydro-3a,6,6,9a-tétraméthylnaphto-[2,1-b]-furane et d'au moins un composant choisi dans le groupe consistant en 4-(tricyclo-[5.2.1.0^{2,6}]-décylidène-8)-butanal, 1-éthoxy-1-(2'-phényléthoxy)-éthane, acétyl cédrène et propylidène phtalide.

17. Composition comprenant un mélange d'acétyl cédrène et d'au moins un composant choisi dans le groupe consistant en 1,2,3a,4,5,5a,6,7,8,9,9a,9b-dodécahydro-3a,6,6,9a-tétraméthylnaphto-[2,1-b]-furane, 4-(tricyclo-[5.2.1.0^{2,6}]-décylidène-8)-butanal, 1-éthoxy-1-(2'-phényléthoxy)-éthane et propylidène phtalide.
